# EUROPEAN PATENT APPLICATION

(11) **EP 1 758 392 A2**
(43) Date of publication of application: **28.02.2007**
(21) Application number: 06254400.2
(22) Date of filing: 22.08.2006
(51) Int. Cl.: H04N 5/76

(54) **Searching Scenes on Personal Video recorder PVR**

(30) Priority: 22.08.2005 KR 20050076731
(71) Applicant: LG Electronics Inc., Seoul 150-721 (KR)
(72) Inventor: Park, Jae Wook, Dong-gu Daegu (KR)
(74) Representative: Camp, Ronald

(57) **Abstract**

In a method of searching scenes recorded in a personal video recorder (PVR) and a television receiver using the same enable a specific scene of a stored video program to be searched quickly and accurately, a video program is stored in a storage medium of a PVR together with caption information corresponding to the video program. To reproduce a specific scene of the stored video program, the stored caption information is displayed for review by the user, enabling a selection of any one caption from the displayed caption information. In response to a selection of a caption, the stored video program is reproduced from the specific scene corresponding to the selected caption. The method includes steps of storing a video signal including caption information; storing the caption information in correspondence to the stored video signal; displaying the stored caption information; and reproducing, in response to a user selection of the displayed caption information, a specific scene of the stored video signal corresponding to the selected caption information.

## Description

The present invention relates to a television receiver. It more particularly relates to a method of searching a specific scene recorded by a television receiver having a personal video recorder and to a television receiver using the same.

A personal video recorder (PVR) of a television receiver includes a storage medium such as a hard disc for recording and reproducing video signals including their associated audio components as well as additional data, such as captioning. The stored signals are digital video signals input to the television receiver and may be broadcast signals received from a broadcast station or other signals such as those supplied from a peripheral device connected to the television receiver. In any case, the input video signals are encoded for storage in a transport stream format, i.e., stored as a digital signal. Thus, a television broadcast receiver provided with a PVR employing a hard disc drive enables a received broadcast signal or an external input signal from an external player to be stored in and reproduced from the hard disc in response to a user selection input.

Accordingly, a contemporary television receiver provided with a PVR receives a broadcast signal in real time, stores the received broadcast signal in the PVR's storage medium, including an index of identifying a stored stream, and displays a playback guide using on-screen display (OSD) data. The OSD playback guide typically includes a list of stored programs and thereby enables a user control of a selective playback of one or more of the stored broadcast signals or programs. Selection of a specific broadcast signal or program may be performed at any time, including while viewing another program, whereby the index of the newly selected program is accessed, the data of the corresponding program is retrieved, and the stream is reproduced. To view or review a specific scene of a selected program, however, the user of the contemporary television receiver is forced to search the entire program, using, for example, one or more playback functions of pause, reverse play, fast or slow play, a still-picture function, and the like for displaying a real-time broadcast signal or other, similarly received, video stream. This operation is time-consuming and encumbers the user, and the end result is likely to be an inaccurate playback selection. The user may even fail to locate a desired scene altogether, since a typical viewer may more readily recall and identify a scene of a movie by its corresponding dialog and since there are technical obstacles in searching a specific scene based on image information alone.

Accordingly, the present invention is directed to a method of searching scenes recorded in a PVR and a television receiver using the same.

Embodiments of the invention can provide a method of searching scenes recorded in a PVR and a television receiver using the same, by which a specific scene of a stored video program can be searched quickly and accurately.

Embodiments of the invention can provide a method of searching scenes recorded in a PVR and a television receiver using the same, which enables a user to jump, as desired, from a currently viewed scene of a currently viewed video program to another specific scene of the currently viewed video program.

Embodiments of the invention can provide a method of searching scenes recorded in a PVR and a television receiver using the same, which enables playback of a selected program according to captioning.

Embodiments of the invention can provide a method of searching scenes recorded in a PVR and a television receiver using the same, which enables a user to select a playback function according to the captioning of a selected program.

Embodiments of the invention can provide a method of searching scenes recorded in a PVR and a television receiver using the same, which enables a search of a stored video program according to captioning.

Embodiments of the invention can provide a method of searching scenes recorded in a PVR and a television receiver using the same, which facilitates a user identification of specific scenes of stored video content.

Additional advantages and features of the invention will be set forth in part in the description which follows and in part will become apparent to those having ordinary skill in the art upon examination of the following or may be learned from practice of the invention. The advantages of the invention may be realized and attained by the structure particularly pointed out in the written description and claims hereof as well as the appended drawings.

In accordance with an aspect of the invention, as embodied and broadly described herein, there is provided a method of searching a scene in a television receiver. The method comprises storing a video signal including caption information; storing the caption information in correspondence to the stored video signal; displaying the stored caption information; and reproducing, in response to a user selection of the displayed caption information, a specific scene of the stored video signal corresponding to the selected caption information.

According to an aspect of the present invention, a video program is stored within a storage medium of a PVR together with caption information corresponding to the video program. Thereafter, in response to a user request for a playback of a specific scene of the stored video program, the stored caption information can be displayed as a navigable list so that the user can select for reproduction the stored video program, beginning from a specific scene, according to the caption information of the specific scene. Each caption of the list corresponds to a specific scene of the stored video program, and multiple lists may be generated so that the present invention may be applied to more than one stored program. Thus, any one item (caption) of the list can be selected to cause the viewed result to jump directly to the scene of the selected caption.

In recording the caption information, a corresponding time of each caption may also be recorded in recording the caption information, so that the stored corresponding time may be utilized as additional information. Other such information, i.e., information that is directly associated with a caption and that may be included with a broadcast signal as received by the television receiver, for example, alternative caption languages, may also be included in a displayed caption information list. Therefore, while a selected video program is being played back by a user, it is possible to cause the display (reproduction) to change directly from one scene to another scene, as desired, with the contents of each caption tracking the current display according to the corresponding time.

It is to be understood that both the foregoing general description and the following detailed description of the present invention are exemplary and explanatory and are intended to provide further explanation of the invention as claimed.

Embodiments of the invention will now be described by way of nonlimiting example only, with reference to the drawings, in which:

FIG. 1A is a block diagram of a television receiver having a PVR according to the present invention;

FIG. 1B is a block diagram of the TS output circuit of FIG. 1A;

FIG. 2 is a block diagram of caption information storage and display elements of the television receiver of FIGS. 1A and 1B;

FIG. 3 is a flowchart of a process for selecting a specific scene according to the method of the present invention; and

FIG. 4 is a diagram illustrating an exemplary screen image for performing a caption review process to select a caption from a caption list and to display a corresponding scene.

Wherever possible, like reference designations will be used throughout the drawings to refer to the same or similar parts.

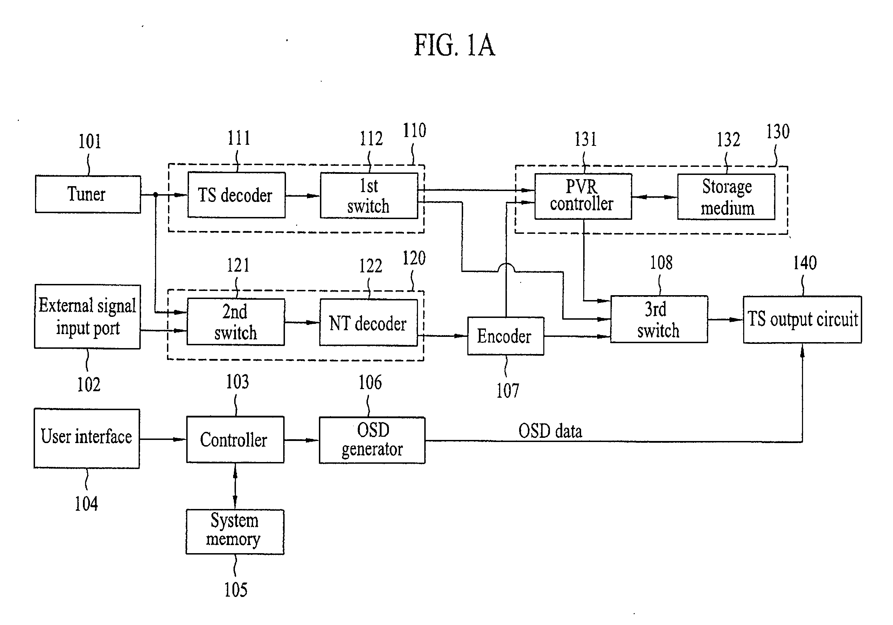

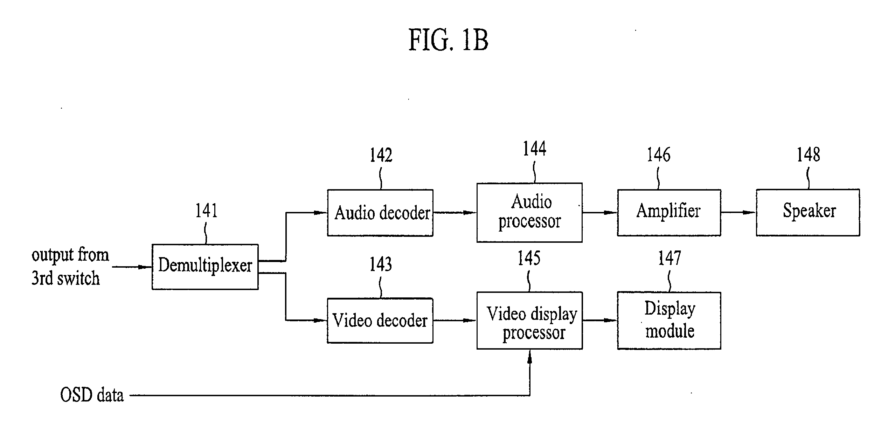

Before describing FIG. 1 in detail, some general comments will be made.

The present invention is applicable to video apparatuses (including digital video recorders) capable of storing a video signal received from various input sources such as a tuner or a peripheral device. For example, a tuner may be provided to receive a user-specified broadcast signal by tuning among available terrestrial or cable broadcast signals to thereby provide a digital input signal or an analog input signal, and a peripheral device such as a digital camcorder or DVD player may be connected to a television receiver via an external signal input port for supplying a video signal to be stored. The video signal input to a video apparatus in accordance with the present invention can be encoded to provide a data stream configured in a transport packet format, i.e., a plurality of serially arranged transport packets each comprising a header and a payload. While a digital broadcast signal as provided from a broadcast station is already configured in a transport stream format, an analog broadcast signal may be encoded locally. The video signal from a peripheral device may require similar encoding prior to storage as a transport stream (TS), and for the sake of convenience, a broadcast signal as described herein may also refer to an input to the television receiver as received from the peripheral device via an external signal input port.

Referring now to FIG. 1A, a television receiver is configured to include a controller 103 for receiving a user selection signal via a user interface 104, e.g., a remote controller or local keypad, to control the system using a system memory 105 and for controlling an OSD generator 106 to generate on-screen display (OSD) data according to an operation of the controller; a digital broadcast signal processor 110 for processing a digital input signal from a tuner 101, using a TS decoder 111 and a first switch 112; an analog broadcast signal processor 120 for processing an analog input signal from the tuner, using a second switch 121 and an NTSC (NT) decoder 122; a PVR unit 130, including a PVR controller 131 and a storage medium 132, for storing and reproducing the digital input signal or analog input signal (herein referred to as a broadcast signal or received video signal), which may be a tuned signal input supplied from the tuner and encoded by an encoder 107 or a video signal input from an external signal input port 102 and similarly encoded; a third switch 108; and a TS output circuit 140 for outputting (displaying) a transport stream, e.g., broadcast signal, provided by the digital or analog broadcast signal processors or the PVR unit. Accordingly, the following description considers for the sake of convenience that a broadcast signal is stored in the storage medium 132, though as it will be described, other input signals similarly received by the television receiver may be similarly stored.

The controller 103 communicates with each of the above elements via a bus (not shown) for providing control signals according to a user selection made via the user interface 104 and a program stored in the system memory 105, e.g., a general memory device different from the storage medium 132, which as a rule requires a significantly greater capacity than the system memory. Accordingly, the controller 103 performs an overall control of the television broadcast receiver, and the system memory 105 stores various system information including a system program of the controller.

In addition to a system program, the system memory 105 stores address information including start and end addresses for designating a position at which each of the broadcast programs is stored within the PVR unit 130 under the control of the controller 103. Hence, the system memory 105 stores the address information of each broadcast program and broadcast program information corresponding to the program(s) stored in the PVR unit 130. In particular, the system memory 105 stores broadcast program information extracted from at least one stored broadcast signal and other broadcast program information according to system programming.

The third switch 108 selects a signal to be processed by the TS output circuit 140. The selected signal may be the output of the digital signal processor 110, i.e., a received digital broadcast signal; the output of the encoder 107, i.e., a received signal such as an analog broadcast signal or peripheral device input that has been encoded into a transport stream format; or the output of the PVR unit 130, i.e., the stored transport stream that is being reproduced. That is, the third switch 108 has three inputs and one selectable output.

An example of the TS output circuit 140 may be seen in FIG. 1B. Here, the TS output circuit 140 includes a demultiplexer 141 for outputting separated data streams, i.e., a video stream and an audio stream, an audio decoder 142, a video decoder 143, an audio processor 144, a video display processor 145, an amplifier 146, a display module 147, and a speaker 148. The audio decoder 142 and the video decoder 142 decode the data streams separately output from the demultiplexer 141 and respectively provide the decoded streams to the audio processor 144 and the video display processor 145. The audio processor 144, amplifier 146, and speaker 148 convert the decoded audio signal into an audible audio signal. The video display processor 145 processes the decoded video signal to be displayed by the display module 147, which may be a PDP module, an LCD module, or a flat CRT module, while overlaying (superposing) OSD data from the OSD generator 106, such that the OSD data is displayed together with the processed video signal.

In particular, under the control of the controller 103, the OSD generator 106 generates OSD data for displaying an OSD playback guide to enable stored information to be navigated and to enable user selections from the displayed guide, whereby a selective playback of a stored video signal (program) is performed under the control of the controller, which in turn controls the PVR unit 130. The OSD playback guide is displayed using caption information of the designated video program and its display is requested via the user interface 104, whereby the controller 103 controls the PVR controller 131 to read and display the caption information of the video program stored in the storage medium 132. If one caption is selected from the caption information of a video program, the controller 103 controls the PVR controller 131 to read the video program from the storage medium 132 and play back the read video program from a scene corresponding to the selected caption.

The digital broadcast signal processor 110 receives a digital broadcast signal from the tuner 101. The TS decoder 111 of the digital broadcast signal processor 110 decodes the received signal, to output separated data streams to the first switch 112, and extracts program and system information protocol (PSIP) information from the broadcast signal. The extracted PSIP information, which includes caption data, is provided selectively to the PVR unit 130 and/or the TS output circuit. That is, the output data streams include a video stream, one or more audio streams, and a stream of additional information associated with the video and audio streams, and according to a control of the controller 103, the first switch 112 selectively outputs the data streams to the PVR unit 130, to the TS output circuit 140, or to both.

The analog broadcast signal processor 120 receives an analog broadcast signal from the tuner 101 or a video signal input from the external signal input port 102. The second switch 121 of the analog broadcast signal processor 120 selects one of the two signals according to a control of the controller 103, to output the selected signal to the NT decoder 120, which decodes the received signal and outputs separated audio data and video data. This data is then encoded by the encoder 107 into a transport stream format, such as an MPEG signal, for storage the PVR unit 130 or processing by the TS output circuit 140. The encoder 107 may be incorporated into the PVR controller 131, to be alternatively embodied as a combination controller & encoder for the PVR unit 130.

The PVR unit 130 receives a digital broadcast signal from the digital broadcast signal processor 110 or a video signal input from the analog broadcast signal processor 120 and encoded by the encoder 107. Accordingly, the PVR controller 131 of the PVR unit 130 receives a transport stream and stores the received transport stream in the storage medium 132 under the control of the controller 103. A storage area is allocated within the hard disc, i.e., the storage medium 132, so that a transport stream comprised of a video stream, audio stream, and additional data streams corresponding to at least one broadcast signal may be sequentially stored in its order of reception. Addresses of the storage area, where corresponding transport streams are stored, are provided to the controller 103 by the PVR controller 131. Therefore, the audio, video, and data streams corresponding to each of the video programs are stored in the storage medium 132, and caption information corresponding to each of the video programs is also stored in the storage medium 132 as a caption list including the corresponding addresses.

According to the present embodiment, a moving picture or video program having caption information is stored for playback using a television receiver provided with a PVR. The video program is first stored in the storage medium 132 together with its corresponding caption information, which may be stored in a list or table format. As video data is stored in the storage medium 132 of the PVR unit 130, associative caption data is decoded and input to the PVR controller 131. The decoded caption data may be derived from PSIP information output from the TS decoder 111 or may be added to a video signal supplied from a peripheral device (for example, via the external signal input port 102) and encoded for storage in the storage medium 132.

The stored caption information of the present embodiment may include parameters of an index, time, string, and bitmap, where the index identifies an item of the caption information list and is typically generated and displayed in a sequence corresponding to the scenes of the video signal, where the time indicates the timing point of the scene corresponding to the caption, where the string includes the actual text (content) of the caption, and where the bitmap may be a representative still image or thumb. Typically, the caption text is subtitle information that may be included in a broadcast signal or subsequently attached to a prerecorded video signal. As known in the art, the language of the caption text may be selected from among more than one captioning language included in additional data of the broadcast signal, in which case a language identifier is included in the parameters of the stored caption information. In the event that the caption information includes a representative still image, a specific caption may also be selected based on the still image corresponding to the selected caption, but a scene search and selection operation based on captions alone can be achieved using less storage capacity and is less taxing to the storage medium.

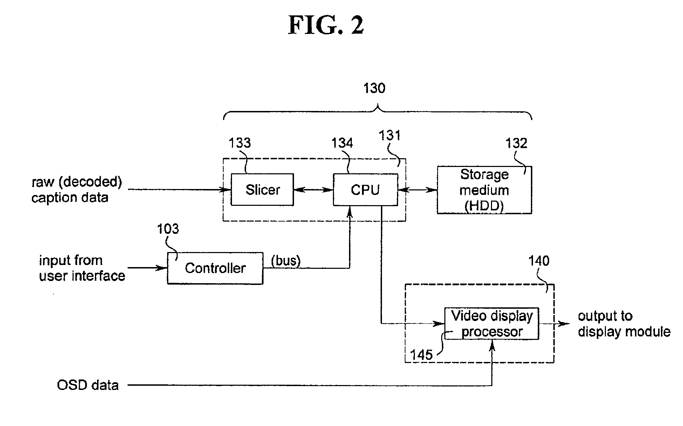

Referring to FIG. 2, which includes elements of FIGS. 1A and 1B for storing caption information as above and for displaying a specific scene as selected by a user, a digital television receiver includes the controller 103 receiving input commands from the user interface 104, a slicer 133 formed by a microcomputer, a central processing unit (CPU) 134, the storage medium 132 such as that utilizing a hard disc drive (HDD), and the video display processor 145 outputting to the display module 147 a video signal superposed with OSD data for forming a playback guide (e.g., a caption review image) or the captioning itself. The video signal corresponds to a stored program, and multiple such streams (programs) may be simultaneously stored for selective playback. Caption information is stored in correspondence to each program.

In decoding PSIP data for input to the PVR unit 130 or otherwise receiving caption data at the television receiver, and specifically at the PVR controller 131, each line of caption information is parsed by lines, such that one line of caption content (e.g., text) from a start point of a corresponding line caption to its end point is recorded in the storage medium (HDD) 132. Thus, the start and end times are recorded together with a corresponding line of caption content. This operation is achieved by the slicer 133, which slices the raw input data of the caption information. Meanwhile, the CPU 134 processes the sliced caption data and outputs the processed data for storage in the storage medium 132 and for display via the video display processor 145, considering such parameters as font type and character size as well as the textual content itself and the resulting display position on a screen. The caption data is processed and stored together with caption synchronization data, which is generated by the CPU 134 in correspondence with the synchronization of the input video stream so that each line of each program can be properly displayed with the corresponding scene. Accordingly, the CPU 134 stores in the storage medium 132 current video data and caption data corresponding to the current video data so that, according to the caption synchronization data, the processed caption data is displayed on a screen together with the corresponding video and OSD data via the video display processor 145 and display module 147.

A television receiver according to the present embodiment is provided with a personal video recorder in which a video signal including caption information is stored. The television receiver comprises a slicer for slicing caption data into line units; a storage medium for storing a video program by synchronizing the corresponding video program with the sliced caption data and storing caption information according to the sliced caption data; a user interface for inputting a user selection of a line unit of the caption data; a controller for generating caption information based on the sliced caption data and for reproducing the stored video program from a scene corresponding to the selected caption data; and a display for displaying the stored caption information and for displaying the reproduced video program together with caption data corresponding to the displayed video program.

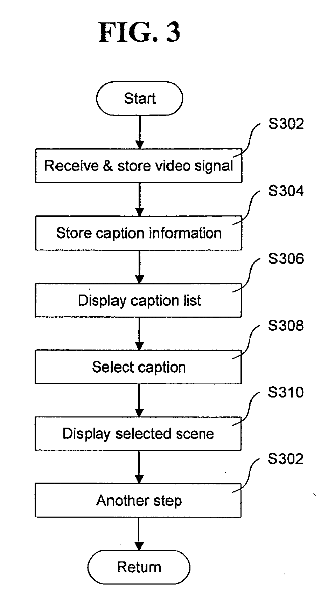

FIG. 3 illustrates a caption review process to select a specific scene. Here, operation of the above circuit includes a first step of receiving and storing a video signal having captioning (S302), a process of caption information storage (S304), a caption review process including caption list display (S306) and scene selection (S308) processes, and a process for displaying a specific scene corresponding to the selection (S310), namely, a scene corresponding to a timing point, which immediately follows the display of the current screen, by "jumping" directly to the new scene and reproducing the stored video program from the timing point of the new scene. Thus, the method of the present invention, in which a specific scene recorded in the PVR of a television receiver is searched and reproduced accordingly, is performed by storing a video signal including caption information; storing the caption information in correspondence to the stored video signal; displaying the stored caption information; and reproducing, in response to a user selection of the displayed caption information, a specific scene of the stored video signal corresponding to the selected caption information.

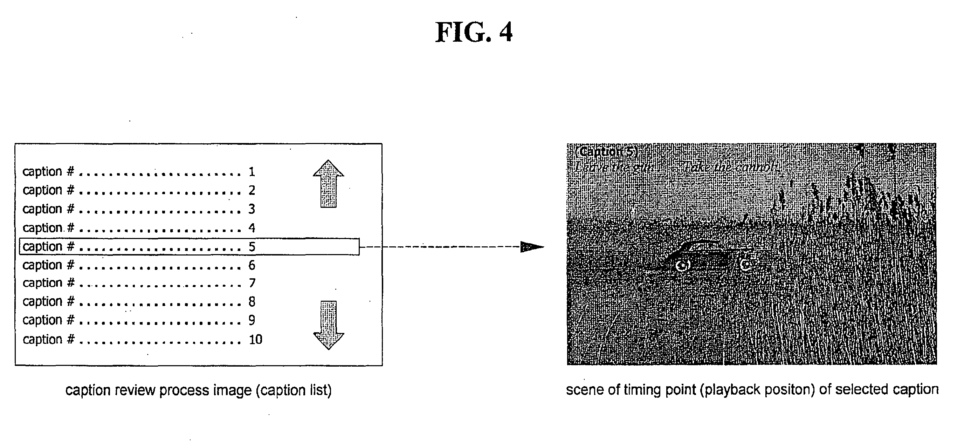

FIG. 4 shows an exemplary screen image for performing a caption review process to select a caption from a caption list and to display a corresponding scene. In the present embodiment, the caption list, i.e., the caption review image of FIG. 4, is displayed in response to a user request for caption information, which is made via the user interface 104 and the controller 103. In doing so, a corresponding command signal is received a corresponding command signal by the CPU 134 of the PVR controller 131, which is delivered via the bus line connected to the controller 103. Accordingly, the caption review process is entered by the user via a menu mode of the television receiver, whereupon the controller 103 controls the PVR controller 131 to generate a list of captions stored in the storage medium 132 according to their corresponding indices. In doing so, the CPU 134 displays, for example, as a formatted list or table, the caption information stored in the storage medium 132 in response to the command signal. Such a caption list or table may simultaneously show both time and caption, according to an index sequence, together with the caption content, e.g., text. The caption information is thus displayed on a screen of the display module 147 as an OSD playback guide and may be displayed by superposing the OSD data over a currently viewed scene of the video signal or by using a separate window, so that a jump directly from the current scene to the new scene may be achieved. The controller 103 then controls the PVR controller 131 to perform a caption review process in a menu mode according to a user command signal input from the user interface 104 with reference to the screen display, i.e., the OSD playback guide. The caption review process is facilitated by navigation keys, e.g., up/down keys, for selecting one of a plurality of captions appearing in the displayed caption information list. That is, the user manipulates the navigation keys to move a cursor or highlighted caption of the list, where overly long captions may be truncated to adhere to (fit) a predetermined size on the screen, so that the caption content may appear in whole or in part. As a result of the user selecting a specific caption, the CPU 134 accesses the storage medium 132 and selects video data corresponding to the timing (playback position) of the selected caption, to display the captions of the video program corresponding to the selected video data.

As shown in FIG. 4, a current scene becomes a scene corresponding to a caption selected through a caption review process, namely, the scene of the timing point of the selected caption. Here, a caption 5 is selected by being highlighted according to an operation of the user interface 104. After a user has thus indicated a selection (display position) of a specific caption via the caption review process and then enters a confirming command corresponding to the specific caption position, the CPU 134 reads a caption list/table from the storage medium 132 to obtain a start scene value of an index corresponding to the selected caption, which corresponds to a time value of the selected caption. The obtained value is output to the video display processor 145, whereby a video reproduction operation is initiated to display a video program from video data corresponding to the selected caption. Typically, the caption number would then be omitted from the resulting display, rather than as shown, but this may be selectively determined.

By adopting embodiments of the present invention, search of a specific caption is facilitated via a caption review process, whereby the video program can be reproduced from a scene corresponding to caption information included in a stored video signal. In addition, a specific caption and a scene corresponding to the specific caption to be searched quickly and accurately. Thus, in viewing a movie or a prescribed video program, where the dialog of a particular scene is more readily recalled and the corresponding image is difficult to ascertain through a manual search of the video content, a scene corresponding to a specific dialog (caption) can be replayed as desired. Embodiments of the present invention can be particularly useful for viewing video programs having subtitled text, and may be used in conjunction with the study of foreign languages.

It will be apparent to those skilled in the art that various modifications can be made in the present invention without departing from the scope of the invention. Thus, it is intended that the present invention covers such modifications provided they come within the scope of the appended claims.

## Claims

1. A method of searching a scene in a television receiver, the method comprising:
storing a video signal including caption information;
storing the caption information in correspondence to the stored video signal;
displaying the stored caption information; and
reproducing, in response to a user selection of the displayed caption information, a specific scene of the stored video signal corresponding to the selected caption information.

2. The method of claim 1, wherein the caption information is displayed on a screen as a playback guide formed of on-screen display data enabling manipulation of the playback guide by a user.

3. The method of claim 1 or 2, wherein the caption information is stored in a format of one of a list and a table.

4. The method of claim 1, 2 or 3 wherein the user selection of the displayed caption information selects one of a plurality of captions included in the stored video signal.

5. The method of claim 4, wherein the caption information includes an index for each caption of the caption information and/or a corresponding time for each caption of the caption information and/or wherein each caption is stored together with a corresponding time and a corresponding content or with a corresponding index and a corresponding content.

6. The method of any preceding claim, further comprising:
displaying a current scene of the stored video signal according to the user selection of the displayed caption information.

7. The method of claim 6, wherein said reproducing is performed while the stored video signal is being displayed and wherein the displayed caption information is superposed on the displayed video signal or is displayed in a separate window.

8. The method of claim 1, wherein the caption information includes parameters of an index, a time, and a string, where the index identifies a specific caption, where the time indicates timing points of a scene corresponding to the specific caption, and where the string includes caption content.

9. The method of claim 8, wherein the parameters of the caption information include a bitmap as a representative still image of the stored video signal at the time point and/or include indices generated and displayed in a sequence corresponding to scenes of the video signal.

10. The method of any preceding claim, wherein the caption information is stored considering at least one of font type, character size, caption content, a display position on a screen.

11. The method of any preceding claim, further comprising:
receiving the video signal to be stored in correspondence to the stored video signal; and
slicing into line units the caption information included in the received video signal.

12. The method of claim 11, further storing comprising:
recording times for a start point and an end point of each line unit together with a corresponding caption content of each line unit.

13. The method of any preceding claim, said caption information storing comprising:
slicing the caption information into line units; and
recording a time from a start point to an end point of each of the captions of the line unit in the storage medium together with a corresponding content of each of the captions of the line unit.

14. A television receiver, comprising:
a slicer arranged to slice caption data into line units;
a storage medium arranged to store a video program by synchronizing the corresponding video program with the sliced caption data and storing caption information according to the sliced caption data;
a user interface arranged to input a user selection of a line unit of the caption data;
a controller arranged to generate caption information based on the sliced caption data and to reproduce the stored video program from a scene corresponding to the selected caption data; and
a display arranged to display the stored caption information and to display the reproduced video program together with caption data corresponding to the displayed video program.

15. A television receiver having a personal video recorder storing a video signal including caption information, the television receiver comprising:
a storage medium arranged to store the video signal including caption information and to store the caption information in correspondence to the stored video signal;
a display arranged to display the stored caption information; and
a controller arranged to reproduce, in response to a user selection of the displayed caption information, a specific scene of the stored video signal corresponding to the selected caption information.
